# EUROPEAN PATENT APPLICATION

(11) **EP 4 492 133 A1**
(43) Date of publication of application: **15.01.2025**
(21) Application number: 23766901.5
(22) Date of filing: 08.03.2023
(51) Int. Cl.: G02F 1/1524, G02F 1/1516

(54) **TUNGSTEN OXIDE PAINT FOR ELECTROCHROMIC ELEMENT, TUNGSTEN OXIDE THIN FILM, AND DIMMING MEMBER**

(30) Priority: 11.03.2022 JP 2022038619
(71) Applicant: National Institute of Advanced Industrial Science and Technology, Chiyoda-ku Tokyo 100-8921 (JP); Toshiba Materials Co., Ltd., Yokohama-shi, Kanagawa, 235-8522 (JP)
(72) Inventor: TAJIMA, Kazuki, Tsukuba-shi, Ibaraki 305-8565 (JP); FUKUSHI, Daisuke, Yokohama-shi, Kanagawa 235-8522 (JP); SAITO, Shuichi, Yokohama-shi, Kanagawa 235-8522 (JP)
(74) Representative: Dehns
(86) International application number: PCT/JP2023/008904
(87) International publication number: WO 2023/171725

(57) **Abstract**

A tungsten oxide coating material for an electrochromic device that is a coating material for forming a tungsten oxide thin film having electrochromic characteristics, the coating material comprising: a solvent; tungsten oxide nanoparticles dispersed in the solvent; and a binder, wherein in the tungsten oxide nanoparticles, a half-value width of a peak detected at 29° ±1° in X-ray diffraction analysis (2*θ*) is 2° or less, and a primary particle size is 5 to 25 nm.

## Description

### Technical Field

The present invention is a technique related to a tungsten oxide thin film used for an electrochromic device to change color by an electrochemical oxidation-reduction reaction.

### Background Art

The electrochromic device (hereinafter also referred to as "ECD" ) is a color variable element with an electrochromic material (hereinafter also referred to as "EC material" ) to change color by an electrochemical oxidation-reduction reaction. The ECD (electrochromic device) has been investigated for use in an on-vehicle mirror that controls reflectance by changing color, and a window of a vehicle or a building that can improve air conditioning efficiency by controlling light transmittance. Further, use of the ECD in a display, sunglasses, and the like is also investigated. The ECD includes, for example, an EC material and a solid electrolyte.

In recent years, application of the ECD to light control glass for buildings and vehicles has been actively investigated. Examples of the EC material used for light control glass include metal oxides typified by tungsten oxide (Patent Literature 1), small molecules typified by viologen (Patent Literature 2), polymers typified by PEDOT-PSS (Patent Literature 3), and coordination polymers typified by metal cyano complex nanoparticles (Patent Literature 4).

Recently, ECDs with organic polymer materials and silver nanoparticles have also been developed. However, an organic polymer material is generally problematic in light resistance in many cases, and is not suitable for use in light control glass. In addition, the ECD with silver nanoparticles has just started to be developed, and the light resistance and the like have not been sufficiently evaluated.

As described above, from the viewpoint of light resistance and the like, the inorganic material is considered to have certain superiority. Among inorganic materials, metal oxides and metal cyano complex nanoparticles have already been commercialized.

However, in an application with tungsten oxide which is a main EC material, various materials including a solid electrolyte are mainly produced by a physical process such as a magnetron sputtering method. That is, because of a batch process with glass as a base material, there is a problem in mass production.

In addition, from the viewpoint of balance among convenience, portability, flexibility, cost, and the like, a flexible light control film with a resin or the like as a transparent base material has been developed (Patent Literature 4).

However, in the technique of Patent Literature 4, from a reason such that a cooling device is required in order to suppress the damage of the resin base material due to the amount of heat input at the time of film formation and the like particularly by the method for producing a solid electrolyte, the cost is high depending on the facility in the process. Therefore, there is a reality that it is difficult to commercialize a flexible light control film with a resin base material.

For example, Smart Glass, which is a general term for light control glass, is expanding the market size thereof. However, Smart Glass is supposed to be produced by a batch process by vapor deposition or sputtering, similarly to Low-E glass or the like. Therefore, production cost and introduction/running cost is a barrier to spread, and cost reduction by material/process development is strongly desired (Non-Patent Literature 1).

From the viewpoint of reducing the cost, as an inorganic EC material, an electrochromic device has been reported in which an electrode formed by a method such as application of a dispersion liquid in which Prussian blue metal cyano complex nanoparticles are dispersed in water and an electrode formed by a method such as application of a dispersion liquid in which tungsten oxide nanoparticles are dispersed in water are combined to generate a change in coloring and transparency (Patent Literature 5).

### Citation List

### Patent Literature

Patent Literature 1: JP 08-254717 A
Patent Literature 2: JP 2009-215166 A
Patent Literature 3: JP 2005-519316 W
Patent Literature 4: JP 2011-180469 A
Patent Literature 5: JP 2018-021113 A

### Non-Patent Literature

Non-Patent Literature 1: QUADRENNIAL TECHNOLOGY REVIEW, Chapter 5, p. 160, DOE, 2015

### Summary of Invention

### Technical Problem

A combination of tungsten oxide and a metal cyano complex as a light control material attracts attention. However, in order to spread a wide variety of applications with a combination of tungsten oxide and a metal cyano complex, there are problems of productivity (cost reduction and mass productivity), durability (number of times, use environment), simplicity of an introduction/control system, and reduction of energy consumption that can meet the needs of various applications. In particular, an EC material capable of color change and high-speed response with high contrast between the time of coloring and the time of colorless and transparent is desired, and an electrochromic device with such an EC material is desired. Further, in the application to the window material for energy saving, it is desired to achieve the application of high efficiency controllability of thermal energy by including a novel EC material from the viewpoint of light resistance and the like.

The present invention has been made in view of the above circumstances, and an object of the present invention is to provide an electrochromic thin film capable of achieving high-speed response and obtaining a color change with high contrast by providing a new EC material, and a light control member as an electrochromic device with the electrochromic thin film.

### Solution to Problem

As a result of intensive investigations, for tungsten oxide nanoparticles as EC materials, the inventors have investigated for a method for producing nanoparticles having various characteristics such as crystallinity, non-crystallinity, and introduction of oxygen defects, and the physical properties. Then, the present inventors have completed the present invention by finding that a thin film formed by adding a binder to a dispersion liquid in which tungsten oxide nanoparticles having a half-value width of a peak detected at 29° ±1° as measured by X-ray diffraction analysis (2 *θ*) of 2° or less and a primary particle size of 5 to 25 nm are dispersed in a solvent to form a coating material and a thin film formed with the coating material has physical properties suitable for application to an electrochromic device.
[1] A tungsten oxide coating material for an electrochromic device that is a coating material for forming a tungsten oxide thin film having electrochromic characteristics, the coating material comprising: a solvent; tungsten oxide nanoparticles dispersed in the solvent; and a binder, wherein in the tungsten oxide nanoparticles, a half-value width of a peak detected at 29° ±1° in X-ray diffraction analysis (2 *θ*) is 2° or less, and a primary particle size is 5 to 25 nm.
[2] The tungsten oxide coating material for an electrochromic device according to [1], wherein a content of the tungsten oxide nanoparticles is 5% by mass or more and 30% by mass or less with respect to a mass of the coating material.
[3] The tungsten oxide coating material for an electrochromic device according to [1] or [2], wherein the binder is one or more types selected from polyvinyl alcohol (PVA), sodium carboxymethylcellulose (CMC), hydroxypropyl cellulose (HPC), and hydroxyethyl cellulose (HEC), and a content of the binder is 0.1% by mass or more and 10% by mass or less with respect to a mass of the coating material.
[4] The tungsten oxide coating material for an electrochromic device according to [1] to [3], comprising a pH adjusting agent.
[5] The tungsten oxide coating material for an electrochromic device according to [4], wherein the pH adjusting agent is one or more types selected from potassium chloride (KCl), sodium chloride (NaCl), lithium chloride (LiCI), potassium hydroxide (KOH), sodium hydroxide (NaOH), and lithium hydroxide (LiOH).
[6] The tungsten oxide coating material for an electrochromic device according to [4] or [5], wherein pH is 5 to 7.
[7] The tungsten oxide coating material for an electrochromic device according to [1] to [6], wherein a tungsten oxide thin film can be formed by a coating method.
[8] A tungsten oxide thin film that is a thin film having electrochromic characteristics, the tungsten oxide thin film comprising: tungsten oxide nanoparticles: and a binder, wherein in the tungsten oxide nanoparticles, a half-value width of a peak detected at 29° ±1° in X-ray diffraction analysis (2 *θ*) is 2° or less, and a primary particle size is 5 to 25 nm.
[9] The tungsten oxide thin film according to [8], comprising a pH adjusting agent.
[10] The tungsten oxide thin film according to [8] or [9], wherein an electrochromic reaction occurs in an electrolyte including any one or more types of (trifluoromethanesulfonyl)imide salts of bis(trifluoromethanesulfonyl) imide, lithium bis(trifluoromethanesulfonyl) imide, potassium bis(trifluoromethanesulfonyl) imide, and sodium bis(trifluoromethanesulfonyl) imide.
[11] A light control member, comprising: the tungsten oxide thin film according to [8] to [10]; a metal cyano complex thin film including metal cyano complex nanoparticles or an oxide thin film including oxide nanoparticles in which a change in coloring and decoloring due to an oxidation-reduction reaction is opposite to that of tungsten oxide; and an electrolyte layer located between the tungsten oxide thin film and the metal cyano complex thin film or the oxide thin film.

The dispersion liquid is a mixture of tungsten oxide nanoparticles and a solvent. In contrast, the coating material of the present invention is obtained by adding a binder to a dispersion liquid. Therefore, the dispersion liquid and the coating materialare distinguished from each other.

### Advantageous Effects of Invention

The present invention can produce and provide an electrochromic device capable of switching coloring and decoloring with high contrast and at high speed by appropriately combining a thin film with the tungsten oxide nanoparticles and a thin film with metal cyano complex nanoparticles.

### Brief Description of Drawings

Fig. 1 is a cross-sectional view showing an example of an electrochromic device according to an embodiment.
Fig. 2 is a view showing X-ray diffraction results of tungsten oxide nanoparticles used in Examples.
Fig. 3 is a transmission electron micrograph of tungsten oxide nanoparticles used in Examples. Fig. 4 is field emission scanning electron micrographs of tungsten oxide thin films according to Examples and Comparative Examples.
Fig. 5 is cyclic voltammograms of tungsten oxide thin films according to Examples and Comparative Examples.
Fig. 6 is visible light transmission spectrum changes of tungsten oxide thin films according to Examples and Comparative Examples.
Fig. 7 is a comparison of cyclic voltammograms of tungsten oxide thin films according to Examples.
Fig. 8 is a cyclic voltammogram of an ECD1 according to Example.
Fig. 9 is a visible light transmission spectrum of the ECD1 according to Example.
Fig. 10 is a photograph of color change of the ECD1 according to Example.
Fig. 11 is a total light transmission spectrum of the ECD1 according to Example.
Fig. 12 is a photograph of color change of an ECD2 according to Example.
Fig. 13 is a total light transmission spectrum of the ECD2 according to Example.
Fig. 14 is a total light transmission spectrum of an ECD3 according to Example.
Fig. 15 is a total light transmission spectrum of an ECD4 according to Example.
Fig. 16 is a graph showing the relationship between the amount of the tungsten oxide nanoparticles 1 added and the pH of the coating material for the coating material according to Example.
Fig. 17 is a graph showing the relationship between the amount of 0.1M NaOH added and the pH of the coating material according to Example.
Fig. 18 is a visible light transmission spectrum change of a tungsten oxide thin film according to Example.
Fig. 19 is a graph showing a result of a cycle test of an ECD5 according to Example.
Fig. 20 is a graph showing a result of a cycle test of the ECD5 according to Example.
Fig. 21 is visible light transmission spectrum changes when withstand voltage characteristics are measured for the ECD5 and an ECD6 according to Example.
Fig. 22 is a graph showing a result of a cycle test of an ECD7 according to Example.

### Description of Embodiments

### [Tungsten oxide coating material for electrochromic device]

A tungsten oxide (WO₃) coating material for an electrochromic device according to the present invention will be described. The tungsten oxide coating material for an electrochromic device (hereinafter, also simply referred to as "coating material" ) according to the present invention is a coating material for forming a tungsten oxide thin film having electrochromic characteristics, and is used for an electrochromic device. Specifically, the coating material of the present invention contains a solvent, tungsten oxide nanoparticles dispersed in the solvent, and a binder.

In the following description, "A to B" indicating a numerical range has the same meaning as "A or more and B or less" .

The tungsten oxide nanoparticles used for the coating material are characterized in that the half-value width of a peak detected at 29° ±1° in X-ray diffraction analysis (2 *θ*) is 2° or less, and the primary particle size is 5 to 25 nm.

The X-ray diffraction analysis (2 *θ*) can be performed with, for example, a Cu-K *α* ray (wavelength: 1.54184 Å) at a tube voltage of 40 kV, a tube current of 40 mA, an operation axis 2 *θ*/*θ*, a scanning range (2 *θ*) of 10° to 60° , a scanning speed of 0.1° /sec, and a step width of 0.02° .

As the peak detected at 29° ±1° used to identify the half-value width, the strongest peak within the range of 29° ±1° is typically used. The strongest peak is a peak having the largest intensity ratio. In the measurement of the half-value width, the smaller value of the values of the root portions at both ends of the peak is used as the reference value. A position from the reference value to the peak top is defined as a peak height. Then, the width of the peak at a half position of the peak height is defined as a half-value width. In a case where there are two peaks at 29° ±1° and the bottoms of the peaks overlap, the half-value width may be obtained by analysis using software of an X-ray diffractometer.

X-ray diffraction indicates the crystallinity of tungsten oxide nanoparticles. If the crystallinity is favorable, a sharp peak having a small half-value width is obtained. The half-value width of the peak detected at 29° ±1° in X-ray diffraction analysis (2*θ*) is 2° or less, indicating that crystaldefects are suppressed. The crystal defect is a disturbance of crystal arrangement. As the crystal defect enters, the defect enters the lower end of the conductor of the band gap, and the apparent band gap narrows. As a result, absorption occurs in the visible light region. For the above reason, the upper limit value of the half-value width of the peak detected at 29° ±1° in the X-ray diffraction analysis (2*θ*) is 2° or less.

The lower limit of the half-value width is not particularly limited, but is preferably 0.1° or more. The half-value width is less than 0.1° , meaning that the repeatability of the crystal is high. This indicates that primary particles often have a primary particle size of more than 25 nm. If the primary particle size increases, the transmitted light is scattered, and thus the transmittance decreases at all wavelengths. Therefore, the lower limit value of the half-value width of the peak detected at 29° ±1° in X-ray diffraction analysis (2*θ*) is preferably 0.1° or more.

The primary particle size of the tungsten oxide nanoparticles is the diameter of the primary particles, and can be identified, for example, by structural analysis with a transmission electron microscope (TEM). If a ligand or the like is adsorbed on the surface of the tungsten oxide nanoparticles, the primary particle size excluding the ligand is derived as primary particles. The primary particle size is the length of the longest diagonal line of the particle. The longest diagonal line of primary particles present in a TEM image with a field of view of 60 nm × 60 nm is to be measured. In addition, only the particles having clear contours of the primary particles are counted. In addition, 10 or more primary particles are observed. For example, those in which the outline cannot be observed due to overlapping of the primary particles are not counted.

The upper limit value of the primary particle size in the tungsten oxide nanoparticles is 25 nm or less from the viewpoint of increasing the specific surface area to improve the electrochemical response speed (that is, the color change rate at which coloring and decoloring are switched) and from the viewpoint of forming a smooth thin film. The lower limit value of the primary particle size in the tungsten oxide nanoparticles is not particularly limited, but is, for example, 5 nm or more.

The lower limit value of the content of the tungsten oxide nanoparticles is 5% by mass or more, and preferably 10% by mass or more with respect to the mass of the coating material (that is, in a case where the total coating material accounts for 100% by mass). The upper limit value of the content of the tungsten oxide nanoparticles is 30% by mass or less, preferably 25% by mass or less with respect to the mass of the coating material. Setting the content of the tungsten oxide nanoparticles within the above range can produce a homogeneous tungsten oxide thin film.

As a method for producing the tungsten oxide nanoparticles used in the coating material according to the present invention, any of known production techniques are adopted. An example of a method for producing tungsten oxide nanoparticles is as follows.

A method for producing tungsten oxide (WO₃) particles includes a sublimation step. The sublimation step is a step of producing tungsten oxide nanoparticles by sublimating a precursor or a precursor solution of the tungsten oxide nanoparticles in an oxygen atmosphere. The precursor of the tungsten oxide nanoparticles is a metal tungsten powder or a tungsten compound powder, and the precursor solution of the tungsten oxide nanoparticles is a solution obtained by dissolving these precursors in a solvent (for example, water or alcohol).

As the tungsten compound, a known compound capable of producing tungsten oxide (WO₃) particles can be used, and examples thereof include various types of tungsten oxide (e. g., WO₃, WO₂), tungsten carbide, ammonium tungstate, calcium tungstate, and tungstic acid.

In the sublimation step, the precursor or precursor solution of the tungsten oxide nanoparticles is sublimated in an oxygen atmosphere by any known technique. For example, in the sublimation step, any of plasma treatment, arc discharge treatment, laser treatment, and electron beam treatment is used, and among them, inductively coupled plasma treatment is suitably used.

Appropriately setting various conditions of the treatment (plasma treatment, arc discharge treatment, laser treatment, or electron beam treatment) performed in the sublimation step and the average particle sizes of the metal tungsten powder and the tungsten compound powder can produce tungsten oxide nanoparticles having a half-value width of a peak detected at 29° ± 1° in X-ray diffraction analysis (2*θ*) of 2° or less and a primary particle size of 5 to 25 nm.

The production method may include a step other than the sublimation step. For example, a heat treatment step may be included after the sublimation step for the purpose of improving the proportion of tungsten oxide (WO₃) in the powder after the sublimation step.

As the solvent used for the coating material, there is used any solvent that can disperse the tungsten oxide nanoparticles and does not affect the tungsten oxide nanoparticles. For example, water or alcohol is used as the solvent. As the alcohol, one or more types are selected from isopropanol, ethanol, methanol, n-propanol, isobutanol, n-butanol, and the like. From the viewpoint of improving the dispersibility of the tungsten oxide nanoparticles, for example, only water is preferable.

The binder used in the coating material is not particularly limited, but there are used any of one or more types of binders selected from organic binders or inorganic binders. Examples of the organic binder used include a cellulose derivative, a vinyl resin, a fluorine-based resin, a silicone resin, an acrylic resin, an epoxy resin, a polyester resin, a melamine resin, a urethane resin, and an alkyd resin. Examples of the inorganic binder used include: products obtained by decomposing hydrolyzable silicon compounds such as alkyl silicates, silicon halides, and partial hydrolysates thereof; organopolysiloxane compounds and polycondensates thereof; phosphates such as silica, colloidal silica, water glass, silicon compounds, and zinc phosphate; metal oxides such as zinc oxide and zirconium oxide; heavy phosphates, cements, gypsum, lime, and frits for borax.

From the viewpoint of preparing a homogeneous tungsten oxide thin film, for example, one or more types selected from polyvinyl alcohol (PVA), sodium carboxymethyl cellulose (CMC), hydroxypropyl cellulose (HPC), and hydroxyethyl cellulose (HEC) are preferably used as a binder.

The lower limit value of the content of the binder is 0.1% by mass or more, preferably 0.15% by mass or more with respect to the mass of the coating material (that is, in a case where the total coating material accounts for 100% by mass). The upper limit value of the content of the binder is 10% by mass or less, preferably 5% by mass or less, and more preferably 2% by mass or less with respect to the mass of the coating material. Setting the content of the binder within the above range extends the pot life of the coating material, and coarse aggregates are not observed in the formed tungsten oxide thin film although the tungsten oxide thin film contains the binder.

The coating material of the present invention may further contain a pH adjusting agent.

The pH adjusting agent used in the coating material is not particularly limited, but there are used any of one or more types of pH adjusting agents selected from pH adjusting agents that do not inhibit electrochemical reactions. The electrochromic device according to the present invention is driven by, for example, an oxidation-reduction reaction related to lithium, potassium, or sodium, and thus is one or more types selected from potassium chloride (KCl), sodium chloride (NaCl), lithium chloride (LiCl), potassium hydroxide (KOH), sodium hydroxide (NaOH), and lithium hydroxide (LiOH).

The content of the pH adjusting agent in the coating material is appropriately controlled in accordance with the solid amount of the tungsten oxide nanoparticles. The pH of the coating material containing the pH adjusting agent is, for example, 2 to 8. However, from the viewpoint of improving durability, the pH of the coating material is preferably 3 or more, more preferably 5 to 7, and still more preferably about 5.

The coating material may contain various other additives in addition to the binder and the pH adjusting agent. Examples of the other additives include an antifoaming agent, a crosslinking agent, a curing catalyst, a pigment dispersant, an emulsifier, a film formation aid, a thickener, a neutralizing agent, and an antiseptic.

### [ECD]

Hereinafter, an electrochromic device (hereinafter referred to as "ECD" ) according to the present invention will be described. The electrochromic device is used as a light control member capable of adjusting light.

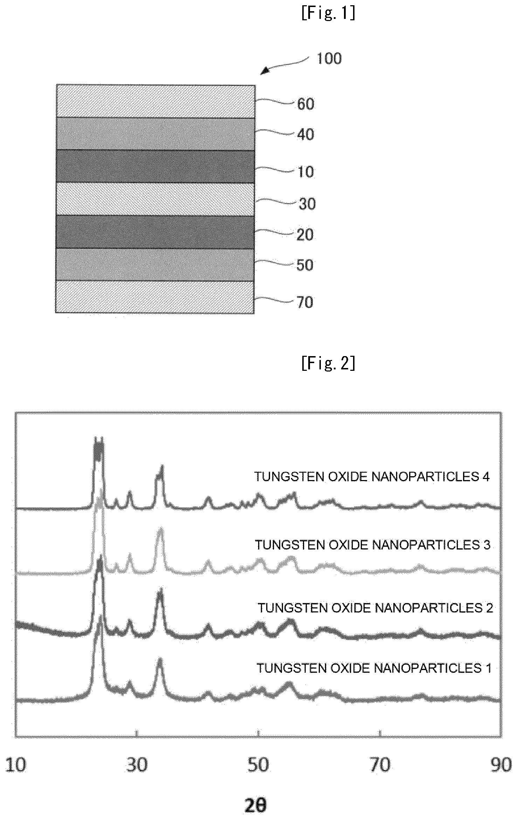

Fig. 1 is a cross-sectional view showing an example of an ECD100 according to the present embodiment. As shown in Fig. 1, the ECD100 includes a first electrochromic layer 10 (an example of a "tungsten oxide thin film" ), a second electrochromic layer 20 (an example of a "metal cyano complex thin film" ), an electrolyte layer 30, a first transparent electrode layer 40, a second transparent electrode layer 50, a first insulating layer 60, and a second insulating layer 70. The ECD100 is configured by stacking these layers (10, 20, 30, 40, 50, 60, and 70).

The electrolyte layer 30 is located between the first electrochromic layer 10 and the second electrochromic layer 20. The first transparent electrode layer 40 is located on the surface of the first electrochromic layer 10 opposite to the electrolyte layer 30. The second transparent electrode layer 50 is located on the surface of the second electrochromic layer 20 opposite to the electrolyte layer 30. The first insulating layer 60 is located on a surface of the first transparent electrode layer 40 on a side opposite to the first electrochromic layer 10. The second insulating layer 70 is located on the surface of the second transparent electrode layer 50 on the side opposite to the second electrochromic layer 20.

The first electrochromic layer 10 and the second electrochromic layer 20 are layers having electrochromic characteristics, and the colors thereof are reversibly changed by an oxidation-reduction reaction (a colored state and a decolored state are reversibly changed). The first electrochromic layer 10 is colored in the reduced state and decolored in the oxidized state. In contrast, the second electrochromic layer 20 decolors in the reduced state and is colored in the oxidized state.

Schematically, the ECD100 is driven by applying a voltage between the first transparent electrode layer 40 and the second transparent electrode layer 50. Specifically, when a voltage is applied between the first transparent electrode layer 40 and the second transparent electrode layer 50, the ECD100 changes between the first state and the second state.

In the first state, the first electrochromic layer 10 is in an oxidized state (that is, a decolored state), and the second electrochromic layer 20 is in a reduced state (that is, a decolored state). In contrast, in the second state, the first electrochromic layer 10 is in a reduced state (that is, a colored state), and the second electrochromic layer 20 is in an oxidized state (that is, a colored state). As understood from the above description, it is possible to control the color change in the ECD100 in accordance with the application of the voltage.

### (1) First electrochromic layer 10

The first electrochromic layer 10 contains the above tungsten oxide (WO₃) particles and a binder. That is, the first electrochromic layer 10 is a tungsten oxide thin film. Tungsten oxide nanoparticles are decolored (almost colorless and transparent) in an oxidized state and bluish in a reduced state.

The thickness of the first electrochromic layer 10 is appropriately set in accordance with the purpose, and is, for example, 500 to 1500 nm. The thickness of the first electrochromic layer 10 may be constant or may not be constant (that is, may be different in accordance with the position in the plane direction).

The present invention can also be conceived as a tungsten oxide thin film having electrochromic characteristics and containing tungsten oxide nanoparticles and a binder, in which the tungsten oxide nanoparticles have a half-value width of a peak detected at 29° ± 1° in X-ray diffraction analysis (2*θ*) of 2° or less and a primary particle size of 5 to 25 nm. Further, the tungsten oxide thin film according to the present invention may contain the above pH adjusting agent.

### (2) Second electrochromic layer 20

The second electrochromic layer 20 contains a material in which coloring and decoloring changes due to an oxidation-reduction reaction are opposite to those of tungsten oxide used for the first electrochromic layer 10, and contains preferably metal cyano complex nanoparticles or oxide nanoparticles. The second electrochromic layer 20 containing metal cyano complex nanoparticles is an example of a metal cyano complex thin film, and the second electrochromic layer 20 containing oxide nanoparticles is an example of an oxide thin film.

If metal cyano complex nanoparticles or oxide nanoparticles are used for the second electrochromic layer 20, any of the types thereof are possible as long as the oxidation-reduction reaction is reversibly caused. The metal cyano complex or the oxide nanoparticles are a material that is colored in an oxidized state and decolored in a reduced state.

Hereinafter, details in a case where metal cyano complex nanoparticles are used for the second electrochromic layer 20 will be described. As the metal cyano complex particles, particles of a Prussian blue type metal cyano complex represented by the general formula "A×M*^{α}* [M*^{β}* (CN)₆]y· _{Z}H₂O" are suitably used.

A is an atom selected from the group consisting of hydrogen, lithium, sodium, and potassium.

M^{α} is one or more types of metal atoms selected from the group consisting of vanadium, chromium, manganese, iron, ruthenium, cobalt, rhodium, nickel, palladium, platinum, copper, silver, zinc, lanthanum, europium, gadolinium, lutetium, barium, strontium, and calcium.

M*^{β}* is one or more types of metal atoms selected from the group consisting of vanadium, chromium, molybdenum, tungsten, manganese, iron, ruthenium, cobalt, nickel, platinum, and copper. x is 0 to 3, y is 0.3 to 1.5, and z is 0 to 30.

As the metal cyano complex, one type represented by the above general formula may be used, or a plurality of types may be mixed and used.

The upper limit value of the primary particle size in the metal cyano complex nanoparticles is 300 nm or less, preferably 100 nm or less, and more preferably 50 nm or less, from the viewpoint of increasing the specific surface area to improve the electrochemical response speed and from the viewpoint of forming a smooth thin film. The lower limit value of the primary particle size in the metal cyano complex nanoparticles is not particularly limited, but is, for example, 4 nm or more, preferably 5 nm or more, and more preferably 6 nm or more. The method for measuring the primary particle size in the metal cyano complex nanoparticles is the same as that described above for the primary particle size of the tungsten oxide nanoparticles.

The thickness of the second electrochromic layer 20 is appropriately set in accordance with the purpose, and is, for example, 500 to 3000 nm. The thickness of the second electrochromic layer 20 may be constant or may not be constant (that is, may be different in accordance with the position in the plane direction).

### (3) Electrolyte layer 30

The electrolyte layer 30 is a layer containing an electrolyte. The first electrochromic layer 10 and the second electrochromic layer 20 cause an electrochromic reaction in the electrolyte.

The electrolyte used for the electrolyte layer 30 preferably contains a (trifluoromethanesulfonyl)imide salt. The (trifluoromethanesulfonyl)imide salt includes one or more types selected from bis(trifluoromethanesulfonyl)imide, lithium bis(trifluoromethanesulfonyl)imide, potassium bis(trifluoromethanesulfonyl)imide, and sodium bis(trifluoromethanesulfonyl)imide. Among them, potassium bis(trifluoromethanesulfonyl)imide is preferable.

The content of the electrolyte in the electrolyte layer 30 is not particularly limited, but is, for example, 0.1 to 1.5 mol/kg, preferably 0.5 to 1.5 mol/kg from the viewpoint of improving the electrochemical response speed in the ECD100.

The electrolyte layer 30 may contain a solvent or a resin in addition to the electrolyte. As the solvent contained in the electrolyte layer 30, a known solvent capable of dissolving the electrolyte contained in the electrolyte layer 30 can be used, and can be selected from one or more types of: for example, chain carbonate esters such as dimethyl carbonate, diethyl carbonate, and ethyl methyl carbonate; cyclic carbonate esters such as ethylene carbonate, propylene carbonate, and butylene carbonate; aliphatic carboxylic acid esters such as methyl acetate, ethyl acetate, methyl propionate, ethyl propionate, methyl butyrate, methyl isobutyrate, and methyl trimethylacetate; aromatic carboxylic acid esters such as methyl benzoate and ethyl benzoate; lactones such as *γ*-butyrolactone and *γ*-valerolactone; lactams such as *ε* - caprolactam and N-methylpyrrolidone; cyclic ethers such as tetrahydrofuran, 2-methyltetrahydrofuran, tetrahydropyran, and 1,3-dioxolane; chain ethers such as 1,2-diethoxyethane and ethoxymethoxyethane; sulfones such as ethylmethylsulfone, sulfolane, 3-methylsulfolane, and 2,4-dimethylsulfolane; nitriles such as acetonitrile, propionitrile, and methoxypropionitrile; phosphoric acid esters such as trimethyl phosphate, ethyl dimethyl phosphate, diethyl methyl phosphate, and triethyl phosphate; alcohols such as ethanol and 2-propanol; glycols such as ethylene glycol, propylene glycol, and polyethylene glycol; and water.

The resin contained in the electrolyte layer 30 is not particularly limited, and can be selected from one or more types of known resins such as an acrylic resin, a urethane resin, a silicone resin, an epoxy resin, a vinyl chloride resin, an ethylene resin, a melamine resin, a phenol resin, a methyl methacrylate resin, a polyvinyl alcohol resin, a polyvinyl acetal resin, and a polyethylene oxide resin. The electrolyte layer 30 contains a resin, thereby allowing to improve the mechanical strength of the electrolyte layer 30.

The electrolyte layer 30 may optionally contain various other additives as long as the function of the electrolyte layer 30 is not impaired. Examples of the known additives include an ultraviolet absorber, an antioxidant, a lubricant, a plasticizer, a mold release agent, a tackifier, a coloring inhibitor, a flame retardant, and an antistatic agent.

The thickness of the electrolyte layer 30 is appropriately set in accordance with the purpose, and is, for example, 50 u m to 0.3 mm. The thickness of the electrolyte layer 30 may be constant or may not be constant (that is, may be different in accordance with the position in the plane direction).

The electrolyte layer 30 may be colored or colorless (transparent). The color of the electrolyte layer 30 can be appropriately changed in accordance with the purpose.

### (4) First transparent electrode layer 40 and second transparent electrode layer 50

The first transparent electrode layer 40 and the second transparent electrode layer 50 are layers made of a transparent conductive material. The conductive material constituting the first transparent electrode layer 40 and the second transparent electrode layer 50 is not particularly limited as long as it is used as an electrochemical device and does not cause deterioration such as corrosion to a certain extent of a problem in practical use, and there can be used, for example, conductive oxides such as indium tin oxide (ITO) and zinc oxide, and conductive oxides obtained by doping metals such as aluminum, silver, and titanium with indium tin oxide and zinc oxide; precious metals such as gold and platinum; alloys or metals having corrosion resistance by a passivation film such as stainless steel or aluminum; and carbon materials such as graphene and carbon nanotubes. From the viewpoint of durability, it is particularly preferable to use fluorine-doped tin (FTO) or transparent conductive oxide (TCO) as the transparent electrode layer (40, 50).

The thicknesses of the first transparent electrode layer 40 and the second transparent electrode layer 50 are appropriately set in accordance with the purpose, and are, for example, 100 to 300 nm. The thicknesses of the first transparent electrode layer 40 and the second transparent electrode layer 50 may be constant or may not be constant (that is, may be different in accordance with the position in the plane direction).

However, from the viewpoint of increasing the contact area between the first electrochromic layer 10 and the first transparent electrode layer 40 to improve the electrochemical response speed, the thickness of the first transparent electrode layer 40 may not be intentionally made constant. Specifically, irregularities are formed on the surface of the first transparent electrode layer 40 (that is, the smoothness of the surface is deteriorated). The convex portion on the surface of the first transparent electrode layer 40 is formed of, for example, a conductive material. Similarly, from the viewpoint of increasing the contact area between the second electrochromic layer 20 and the second transparent electrode layer 50 to improve the response speed, the thickness of the second transparent electrode layer 50 may not be constant.

The first transparent electrode layer 40 may contain a known additive for the purpose of improving adhesion to the first electrochromic layer 10 or suppressing corrosion. Similarly, the second transparent electrode layer 50 may contain a known additive for the purpose of improving adhesion to the second electrochromic layer 20 or suppressing corrosion. Examples of the known additives include an ultraviolet absorber, an antioxidant, a lubricant, a plasticizer, a mold release agent, a tackifier, a coloring inhibitor, a flame retardant, and an antistatic agent.

### (5) First insulating layer 60 and second insulating layer 70

The first insulating layer 60 and the second insulating layer 70 are layers made of a transparent insulating material. For example, the first insulating layer 60 and the second insulating layer 70 are formed of resin, glass, or the like. Examples of the resin include polyethylene terephthalate (PET), polycarbonate, and polyethylene naphthalate (PEN). The first insulating layer 60 and the second insulating layer 70 may contain known additives such as an ultraviolet absorber, an antioxidant, a lubricant, a plasticizer, a release agent, a tackifier, a coloring inhibitor, a flame retardant, and an antistatic agent.

The thicknesses of the first insulating layer 60 and the second insulating layer 70 are, for example, 50 u m to 1.1 mm. The thicknesses of the first insulating layer 60 and the second insulating layer 70 may be constant or may not be constant (that is, may be different in accordance with the position in the plane direction).

As described above, the ECD100 changes between the first state and the second state by the application of the voltage. Herein, a configuration is assumed in which Prussian blue type metal complex particles (for example, iron-iron cyano complex particles) are used as metal cyano complex nanoparticles in the second electrochromic layer 20, and a transparent material is used for the electrolyte layer 30. In the above configuration, the ECD100 is to exhibit a color change of dark blue - colorless and transparent. Tungsten oxide is almost colorless and transparent in the oxidized state, and iron-iron cyano complex particles are almost colorless and transparent in the reduced state. Therefore, the ECD100 becomes colorless and transparent in the first state. On the other hand, tungsten oxide is colored blue in the reduced state, and iron-iron cyano complex nanoparticles are colored blue in the oxidized state. Therefore, the ECD100 exhibits a deep blue color in the second state.

The ECD100 according to the present invention is not limited to the above configuration. For example, the first insulating layer 60 and the second insulating layer 70 may be omitted in the ECD100. In addition, the ECD100 may include layers other than the layers (10, 20, 30, 40, 50, 60, and 70) described above. For example, another layer (for example, an insulating layer) may be provided between the first transparent electrode and the first insulating layer 60. Similarly, another layer may be provided between the second transparent electrode and the second insulating layer 70.

According to the ECD of the present embodiment, combining the first electrochromic layer 10 containing tungsten oxide (WO₃) nanoparticles and the second electrochromic layer 20 containing metal cyano complex nanoparticles can achieve high response speed and provide a color change with high contrast.

Hereinafter, an example of a method for producing the ECD will be described. For example, two commercially available substrates with a transparent electrode (for example, ITO-coated glass) are used as the base material. In a case where ITO-coated glass is used as a base material, ITO corresponds to the first transparent electrode layer 40 and the second transparent electrode layer 50 in Fig. 1, and similarly glass corresponds to the first insulating layer 60 and the second insulating layer 70. Each of the two base materials is referred to as a first substrate (second transparent electrode layer 50+ second insulating layer 70) and a second substrate (first transparent electrode layer 40+ first insulating layer 60).

First, the second electrochromic layer 20 (metal cyano complex thin film) is formed on the first substrate with a coating material containing metal cyano complex nanoparticles by using a coating method such as a wet coating process such as slit coating, spin coating, bar coating, or spray coating, thereby producing the first film-formed substrate. Similarly, the second film-formed substrate is produced by forming the first electrochromic layer 10 (tungsten oxide thin film) on the second substrate by the tungsten oxide coating material according to the present invention using the same method. The electrolyte layer 30 is formed on the first film-formed substrate with a dispenser. Further, a sealing structure is formed on the outer periphery with a UV curable resin. Alternatively, this sealing structure can be formed with a commercially available electronic device sealing tape or the like.

Thereafter, the first film-formed substrate is covered with the second film-formed substrate from above, and pressed and bonded in a vacuum chamber. In a case where the sealing tape is used, there is no problem even if bonding is performed at room temperature and atmospheric pressure. Thus, an ECD having a structure of first insulating layer 60/first transparent electrode layer 40/first electrochromic layer 10/electrolyte layer 30/second electrochromic layer 20/second transparent electrode layer 50/second insulating layer 70 is obtained.

### Examples

Hereinafter, the present invention will be specifically described with reference to Examples, but the present invention is not limited to these Examples.

### [Tungsten oxide nanoparticles]

Tungsten oxide nanoparticles 1 to 4 were produced as follows.

### <Tungsten oxide nanoparticles 1>

Tungsten oxide nanoparticles obtained by pulverizing, by a dry bead mill, tungsten oxide nanoparticles prepared by using the sublimation step

### <Tungsten oxide nanoparticles 2>

Tungsten oxide nanoparticles prepared by a sublimation step

### <Tungsten oxide nanoparticles 3>

Tungsten oxide nanoparticles prepared by a sublimation step and then fired at 450° C in the air

### <Tungsten oxide nanoparticles 4>

Tungsten oxide nanoparticles prepared by a sublimation step and then fired at 550° C in the air

Fig. 2 shows an analysis result of the tungsten oxide nanoparticles 1 to 4 by powder X-ray diffraction. The X-ray diffraction method was performed with Cu-K *α* rays (wavelength: 1.54184 Å). The tungsten oxide nanoparticles 1 to 4 matched the diffraction information of the tungsten oxide nanoparticles retrieved from the standard sample database.

For the tungsten oxide nanoparticles 1 to 4, the half-value width of the peak (strongest peak) detected at 29° ± 1° in the X-ray diffraction analysis (2*θ*) was specified. The specified half-value width is as follows.
Tungsten oxide nanoparticles 1: 0.9°
Tungsten oxide nanoparticles 2: 0.7°
Tungsten oxide nanoparticles 3: 0.7°
Tungsten oxide nanoparticles 4: 0.6°

In particular, a broad peak was also observed in the tungsten oxide nanoparticles 1, suggesting low crystallinity.

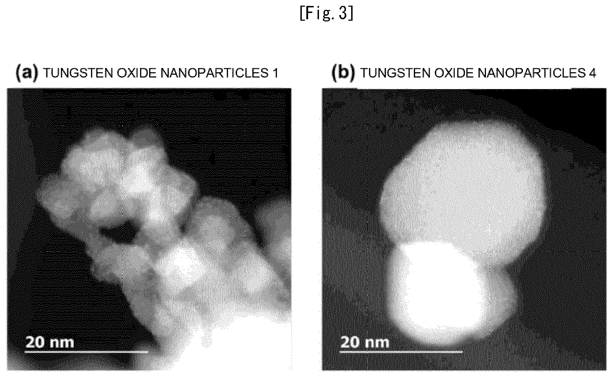

Fig. 3 is a transmission electron micrograph of the tungsten oxide nanoparticles 1 and 4. It was confirmed that both the tungsten oxide nanoparticles 1 and the tungsten oxide nanoparticles 4 had a primary particle size within a range of 5 to 25 nm. Specifically, the tungsten oxide nanoparticles 1 were aggregates of nanoparticles (primary particles) having a diameter of about 10 nm or less, and the tungsten oxide nanoparticles 4 were aggregates of nanoparticles having a diameter of about 20 nm.

### [Tungsten oxide coating material for electrochromic device]

As described below, the tungsten oxide coating material for an electrochromic device according to Examples and the dispersion liquid according to Comparative Examples wereprepared.

### <Example 1>

After 25 g of the tungsten oxide nanoparticles 1 (powder sample) were suspended in 75 mL of water, PVA was added as a binder in order to lower the surface tension, and stirring was performed to provide a coating material according to Example 1. PVA was added such that the PVA solid content with respect to the total coating material accounted for 0.63% by mass.

### <Example 2>

The procedure was performed in a same manner as in Example 1 except that PVA was added such that the PVA solid content with respect to the total coating material accounted for 0.15% by mass.

### <Example 3>

The procedure was performed in a same manner as in Example 1 except that PVA was added such that the PVA solid content with respect to the total coating material accounted for 1.29% by mass.

### <Example 4>

The procedure was performed in a same manner as in Example 1 except that CMC was added as a binder instead of PVA. Addition was performed such that the CMC solid content with respect to the total coating material accounted for 1.32% by mass.

### <Example 5>

The procedure was performed in a same manner as in Example 1 except that HPC was added as a binder instead of PVA. Addition was performed such that the HPC solid content with respect to the total coating material accounted for 0.68% by mass.

### <Example 6>

The procedure was performed in a same manner as in Example 1 except that HEC was added as a binder instead of PVA. Addition was performed such that the HEC solid content with respect to the total coating material accounted for 0.83% by mass.

### <Comparative Example 1>

The procedure was performed in a same manner as in Example 1 except that no binder was added. That is, Comparative Example 1 is merely a dispersion liquid, not a coating material.

### [Tungsten oxide thin film]

Tungsten oxide thin films (first electrochromic layers) according to Examples and Comparative Examples were prepared as follows.

### <Example 1-A>

On an ITO-coated glass substrate made of glass (first insulating layer) coated with ITO (first transparent electrode layer), a tungsten oxide thin film according to Example 1-A was prepared with the coating material of Example 1. A spin coating method was used to form the tungsten oxide thin film.

First, the coating material of Example 1 was filtered before use to adjust the viscosity to about 15 mPa · s. 2 ml was weighed with a micropipette, and dropped onto a 100 mm square ITO-coated glass substrate placed on a spin coater, and rotation was performed at 400 rpm for 10 seconds, and then at 800 rpm for 10 seconds to form a thin film. The prepared thin film was naturally dried to provide Example 1-A. The film thickness of the tungsten oxide thin film according to Example 1-A is about 1000 nm.

### <Example 1-B>

The tungsten oxide thin film according to Example 1-B was formed on an ITO-coated polyethylene terephthalate (PET) substrate made of polyethylene terephthalate (first insulating layer) coated with ITO (first transparent electrode layer) with the coating material according to Example 1. A spin coating method was used to form the tungsten oxide thin film.

First, the coating material according to Example 1 was filtered before use to adjust the viscosity to about 15 mPa · s. 500 *µ* l was weighed with a micropipette, and dropped onto a 50 mm square ITO-coated PET substrate placed on a spin coater, and rotation was performed at 400 rpm for 10 seconds, and then at 800 rpm for 10 seconds to form a thin film. The prepared thin film was naturally dried to provide Example 1-B. The film thickness of the tungsten oxide thin film according to Example 1-B is about 1000 nm.

### <Example 1-C>

The procedure was performed in a same manner as in Example 1-B except that the tungsten oxide thin film according to Example 1-C was formed on an ITO-coated polycarbonate substrate made of polycarbonate (first insulating layer) coated with ITO (first transparent electrode layer). The film thickness of the tungsten oxide thin film according to Example 1-C is about 1000 nm.

### <Example 1-D>

The procedure was performed in a same manner as in Example 1-B except that the tungsten oxide thin film according to Example 1-D was formed on an ITO-coated polyethylene naphthalate (PEN) substrate made of polyethylene naphthalate (first insulating layer) coated with ITO (first transparent electrode layer). The film thickness of the tungsten oxide thin film according to Example 1-D is about 1000 nm.

### <Example 2-A>

The tungsten oxide thin film according to Example 2-A was formed with the coating material according to Example 2 on an ITO-coated glass substrate similar to that used in Example 1-A. A spin coating method was used to form the tungsten oxide thin film.

First, the coating material according to Example 2 was filtered before use to adjust the viscosity to about 15 mPa · s. 500 *µ* l was weighed with a micropipette, and dropped onto a 50 mm square ITO-coated glass substrate placed on a spin coater, and rotation was performed at 400 rpm for 10 seconds, and then at 800 rpm for 10 seconds to form a thin film. The prepared thin film was naturally dried to provide Example 2-A. The film thickness of the tungsten oxide thin film according to Example 2-A is about 1000 nm.

### <Example 3-A>

The procedure was performed in a same manner as in Example 2-A except that the coating material according to Example 3 was used. The film thickness of the tungsten oxide thin film according to Example 3-A is about 1000 nm.

### <Example 4-A>

The tungsten oxide thin film according to Example 4-A was formed with the coating material according to Example 4 on an ITO-coated glass substrate similar to that used in Example 1-A. A spin coating method was used to form the tungsten oxide thin film.

First, the coating material according to Example 4 was filtered before use to adjust the viscosity to about 15 mPa · s. 400 *µ* l was weighed with a micropipette, and dropped onto a 50 mm square ITO-coated glass substrate placed on a spin coater, and rotation was performed at 350 rpm for 5 minutes, and then at 1000 rpm for 5 seconds to form a thin film. The prepared thin film was naturally dried to provide Example 4-A. The film thickness of the tungsten oxide thin film according to Example 4-A is about 1000 nm.

### <Example 5-A>

The tungsten oxide thin film according to Example 5-A was formed with the coating material according to Example 5 on an ITO-coated glass substrate similar to that used in Example 1-A. A spin coating method was used to form the tungsten oxide thin film.

First, the coating material according to Example 5 was filtered before use to adjust the viscosity to about 15 mPa · s. 400 *µ* l was weighed with a micropipette, and dropped onto a 50 mm square ITO-coated glass substrate placed on a spin coater, and rotation was performed at 250 rpm for 5 minutes, and then at 1000 rpm for 5 seconds to form a thin film. The prepared thin film was naturally dried to provide Example 5-A. The film thickness of the tungsten oxide thin film according to Example 5-A is about 1000 nm.

### <Example 6-A>

The procedure was performed in a same manner as in Example 5-A except that the coating material according to Example 6 was used. The film thickness of the tungsten oxide thin film according to Example 6-A is about 1000 nm.

### <Comparative Example 1-A>

The procedure was performed in a same manner as in Example 2-A except that the dispersion liquid according to Comparative Example 1 was used instead of the coating material. The film thickness of the tungsten oxide thin film according to Comparative Example 1-A is about 1000 nm.

### <Evaluation of physical properties of tungsten oxide thin film>

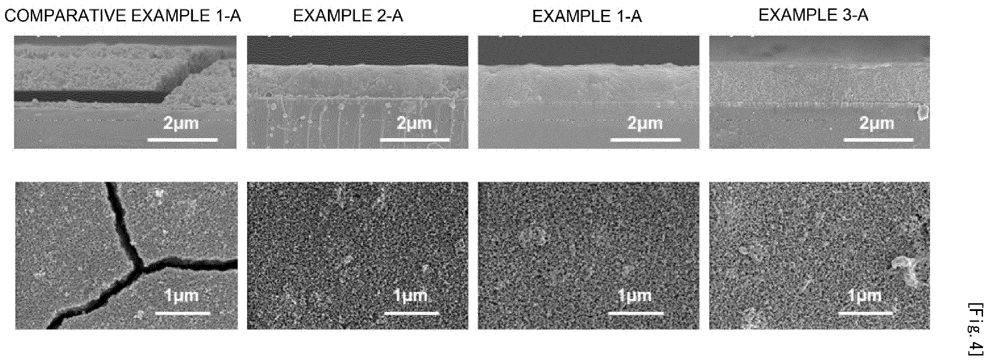

Fig. 4 is field emission scanning electron micrographs of Examples 1-A, 2-A, and 3-A and Comparative Example 1-A. As shown in Fig. 4, Comparative Example 1-A with no binder added has poor adhesion to the ITO-coated glass substrate, and film peeling and large cracks are also observed. In contrast, in Examples 1-A, 2-A, and 3-A with PVA added, adhesion was favorable, and film peeling and large cracks were not observed.

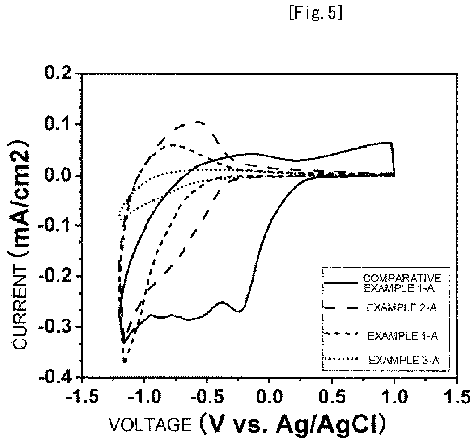

In addition, the electrochromic characteristics of Examples 1-A, 2-A, and 3-A and Comparative Example 1-A were evaluated by cyclic voltammetry. Specifically, a cyclic voltammogram was acquired at a scan rate of 5 millivolt/second using a platinum wire as a counter electrode, a saturated silver/silver chloride electrode as a reference electrode, and a potassium bis(trifluoromethanesulfonyl) imide (KTFSI)-propylene carbonate solution having a concentration of 1.5 mol/kg as an electrolyte. Fig. 5 shows cyclic voltammograms of Examples 1-A, 2-A, and 3-A and Comparative Example 1-A.

As shown in Fig. 5, it was found that Examples 1-A, 2-A, and 3-A produced better oxidation-reduction reactions than Comparative Example 1-A.

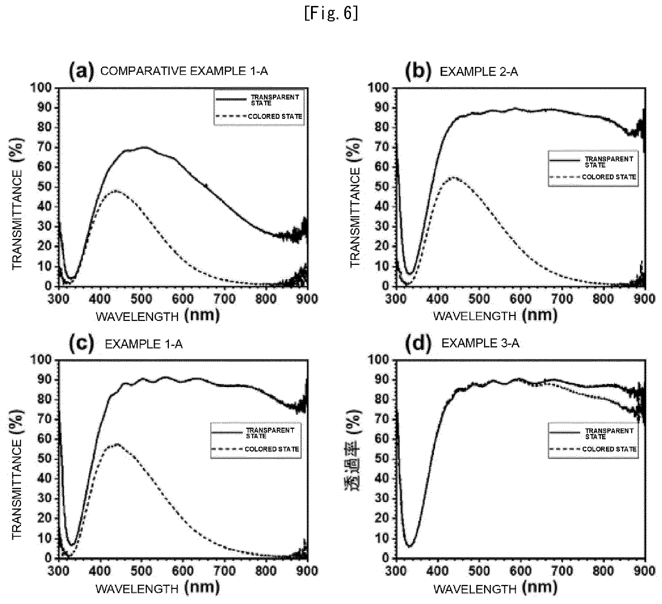

Further, for Examples 1-A, 2-A, and 3-A and Comparative Example 1-A, measurement was performed with the end potentials set to -1.2 V (reduction state) and +1.0 V (oxidation state) by chronocoulometry measurement, and a visible light transmission spectrum at the end was acquired. Fig. 6 shows visible light transmission spectra of Examples 1-A, 2-A, and 3-A and Comparative Example 1-A.

As shown in Fig. 6, it is found that the oxidation state of +1.0 V exhibits colorless and transparent and the reduction state of -1.2 V exhibits a deep blue color. However, as the amount of PVA added increases, the amount of tungsten nanoparticles (WO₃) relatively decreases, and the oxidation-reduction reaction becomes poor. Therefore, the amount of PVA added is preferably 0.1 to 1.0% by mass with respect to the total coating material from the viewpoint of higher contrast.

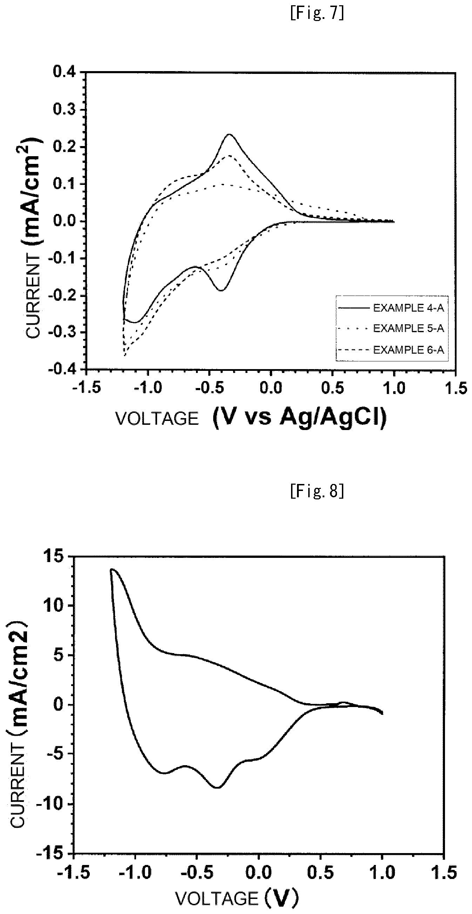

In addition, the electrochromic characteristics of Examples 4-A, 5-A, and 6-A were evaluated. Specifically, a cyclic voltammogram was acquired at a scan rate of 5 millivolt/second using a platinum wire as a counter electrode, a saturated silver/silver chloride electrode as a reference electrode, and a potassium bis(trifluoromethanesulfonyl) imide (KTFSI)-propylene carbonate solution having a concentration of 1.5 mol/kg as an electrolyte. Fig. 7 shows cyclic voltammograms of Examples 4-A, 5-A, and 6-A. As shown in Fig. 7, it was found that the tungsten oxide thin film caused a favorable oxidation-reduction reaction even when any binder was used.

### [Metal cyano complex thin film]

As described below, the coating material of the metal cyano complex nanoparticles (Preparation Example 1) was prepared, and iron-iron cyano complex thin films (second electrochromic layers) were prepared according to Preparation Examples 1-A to 1-D.

### <Iron-iron cyano complex nanoparticles (Prussian blue)>

First, 30 mL of an aqueous solution obtained by dissolving 16.2 g of iron nitrate-9 hydrate in water was mixed with an aqueous solution obtained by dissolving 14.5 g of sodium ferrocyanide· 10 hydrate in 60 mL of water, and stirring was performed for 5 minutes. A precipitate of Prussian blue, which was a precipitated blue iron-iron cyano complex nanoparticle, was centrifuged, washed three times with water, followed by one time with methanol, and dried under reduced pressure to provide iron-iron cyano complex nanoparticles. The yield in this case was 11.0 g, and the yield was 97.4% as Fe[Fe(CN)₆]_{0.75}· 3. 75H₂O. The precipitate of the prepared iron-iron cyano complex nanoparticles AFe1 was analyzed with a powder X-ray diffractometer, and the result was consistent with the diffraction information of Fe₄[Fe(CN)₆]₃, which is Prussian blue, retrieved from the standard sample database. As a result of measurement with a transmission electron microscope, the iron-iron cyano complex nanoparticles were aggregates of nanoparticles (primary particles) having a diameter of 5 to 25 nm.

### <Preparation Example 1>

Then, 0.40 g of iron-iron cyano complex nanoparticles were suspended in 8 mL of water, 80 mg of sodium ferrocyanide· 10 hydrate was then added, and stirred and changed into a blue transparent solution. Thus, an iron-iron cyano complex nanoparticle-containing coating material according to Preparation Example 1 was obtained.

### <Preparation Example 1-A>

An iron-iron cyano complex nanoparticle thin film according to Preparation Example 1-A was prepared on an ITO-coated glass substrate by a spin coating method with the coating material according to Preparation Example 1. Specifically, a 50 mm square ITO-coated glass substrate was placed on a spin coater, and 500 *µ*L of a mixture of 10% by mass of PVA as a binder was added dropwise to the coating material of Preparation Example 1 prepared to 9% by mass, and rotation was performed at 400 rpm for 10 seconds and then at 900 rpm for 10 seconds to prepare Preparation Example 1-A on the ITO-coated glass substrate. The film thickness of the iron-iron cyano complex nanoparticle thin film according to Preparation Example 1-A is about 1000 nm.

### <Preparation Example 1-B>

The procedure was performed in a same manner as in Preparation Example 1-A except that an ITO-coated polyethylene terephthalate (PET) substrate was used instead of the ITO-coated glass substrate. The film thickness of the iron-iron cyano complex nanoparticle thin film according to Preparation Example 1-B is about 1000 nm.

### <Preparation Example 1-C>

The procedure was performed in a same manner as in Preparation Example 1-A except that an ITO-coated polycarbonate substrate was used instead of the ITO-coated glass substrate. The film thickness of the iron-iron cyano complex nanoparticle thin film according to Preparation Example 1-C is about 1000 nm.

### <Preparation Example 1-D>

The procedure was performed in a same manner as in Preparation Example 1-A except that an ITO-coated polyethylene naphthalate (PEN) substrate was used instead of the ITO-coated glass substrate. The film thickness of the iron-iron cyano complex nanoparticle thin film according to Preparation Example 1-D is about 1000 nm.

### [ECD]

The tungsten oxide thin film (first electrochromic layer) and the metal cyano complex thin film (second electrochromic layer) were combined to prepare an ECD1 to ECD4 according to Examples. Then, each prepared ECD was evaluated.

### <ECD1>

Tungsten oxide/iron-iron cyano complex nanoparticle ECD was prepared as a dark blue-transparent ECD1. Specifically, the ECD1 was prepared by sandwiching an electrolyte layer between the ITO-coated glass substrate on which the tungsten oxide thin film according to Example 1-A was formed and the ITO-coated glass substrate on which the iron-iron cyano complex nanoparticle thin film according to Preparation Example 1-A was formed. As the electrolyte layer, there was used one obtained by adding 30 parts by weight of a methyl methacrylate polymer to a potassium bis(trifluoromethanesulfonyl) imide (KTFSI)-propylene carbonate solution having a concentration of 1.5 mol/kg with respect to 100 parts by weight of propylene carbonate, and heating at 60° C to 80° C for about 24 hours to increase the viscosity. In the ECD1, the potential was defined with the working electrode on the tungsten oxide thin film side.

Fig. 8 shows the results of measuring the cyclic voltammogram of the ECD1 at a scan rate of 5 millivolt/sec. As shown in Fig. 8, it is found that the ECD1 shows a favorable oxidation-reduction reaction.

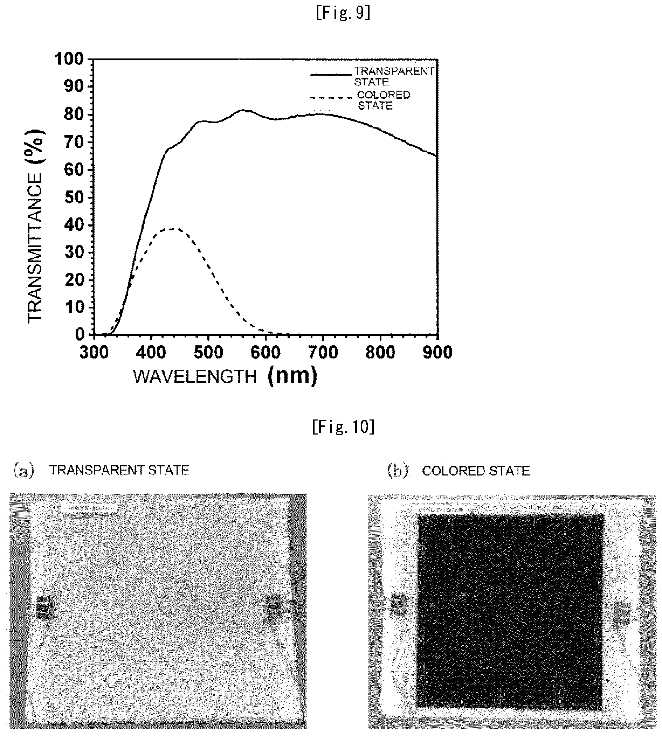

Fig. 9 shows the results of acquiring the visible light transmission spectrum of the ECD1. As shown in Fig. 9, the ECD1 exhibited a dark colored state when a voltage of - 0.8 V was applied, and returned to a colorless and transparent state when a voltage of +1.2 V was applied. Fig. 10 shows a photograph of the color change of the ECD1.

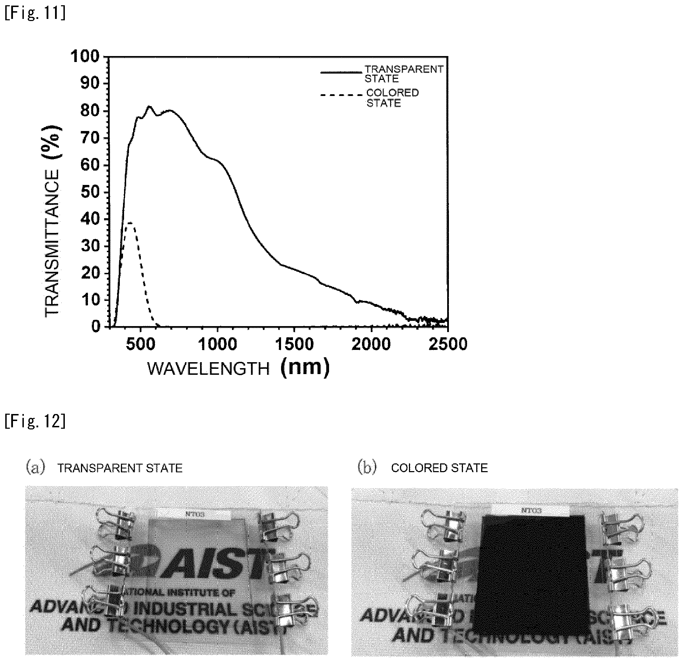

Fig. 11 shows the result of acquiring the total light transmission spectrum of the ECD1. This measurement was performed with a battery of plus or minus 1.5 V. As shown in Fig. 11, the ECD1 can switch the transmittance not only in the visible light region but also in a wide wavelength region up to the near infrared region. From the obtained measurement data, the visible light transmittance and the solar transmittance were calculated with JIS R 3106:1998 (ISO 9050:2003). The visible light transmittance was 71.71% in the transparent state and 7.73% in the colored state. The solar transmittance was 55.13% in the transparent state and 6.12% in the colored state.

From the above results, it is found to exhibit an effective performance as a light control glass.

### <ECD2>

An ECD2 is similar to the ECD1 except for using the ITO-coated PET substrate on which the tungsten oxide thin film according to Example 1-B is formed, and the ITO-coated PET substrate on which the iron-iron cyano complex nanoparticle thin film according to Preparation Example 1-B is formed. In the ECD2, the potential was defined with the working electrode on the tungsten oxide thin film side.

Fig. 12 shows a photograph of the color change of the ECD2. The ECD2 exhibited a dark colored state upon application of a voltage of -0.8 V, and returned to a colorless and transparent state upon application of a voltage of +1.2 V.

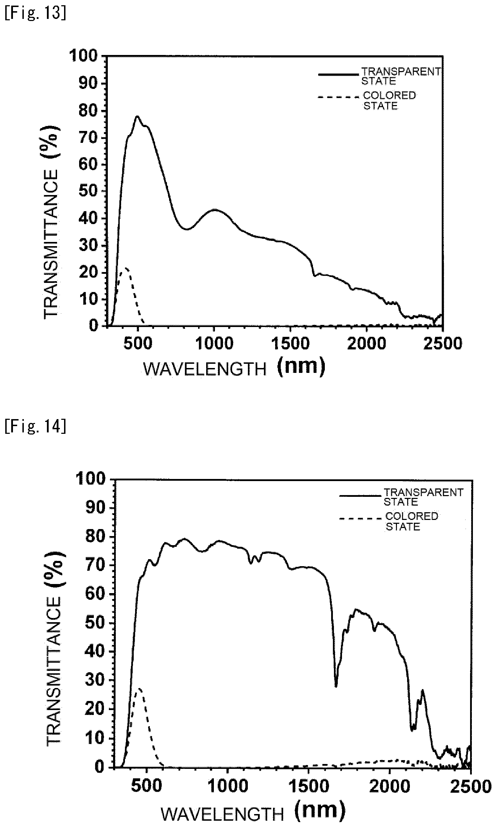

Fig. 13 shows the result of acquiring the total light transmission spectrum of the ECD2. This measurement was performed with a battery of plus or minus 1.5 V. As shown in Fig. 13, the ECD2 can switch the transmittance not only in the visible light region but also in a wide wavelength region up to the near infrared region. From the obtained measurement data, the visible light transmittance and the solar transmittance were calculated with JIS R 3106:1998 (ISO 9050:2003). The visible light transmittance was 78.98% in the transparent state and 1.64% in the colored state. The solar transmittance was 55.81% in the transparent state and 2.86% in the colored state.

From the above results, it is found to exhibit an effective performance as a light control film.

### <ECD3>

An ECD3 is similar to the ECD1 except for using an ITO-coated polycarbonate substrate on which the tungsten oxide thin film according to Example 1-C is formed, and an ITO-coated polycarbonate substrate on which the iron-iron cyano complex nanoparticle thin film according to Preparation Example 1-C is formed. In the ECD3, the potential was defined with the working electrode on the tungsten oxide thin film side.

Fig. 14 shows the result of acquiring the total light transmission spectrum of the ECD3. This measurement was performed with a battery of plus or minus 1.5 V. As shown in Fig. 14, the ECD3 can switch the transmittance not only in the visible light region but also in a wide wavelength region up to the near infrared region. From the obtained measurement data, the visible light transmittance and the solar transmittance were calculated with JIS R 3106:1998 (ISO 9050:2003). The visible light transmittance was 72.63% in the transparent state and 6.75% in the colored state. The solar transmittance was 67.49% in the transparent state and 4.80% in the colored state.

From the above results, it is found to exhibit an effective performance as a light control film.

### <ECD4>

An ECD4 is similar to the ECD1 except for using the ITO-coated PEN substrate on which the tungsten oxide thin film according to Example 1-D is formed, and the ITO-coated PEN substrate on which the iron-iron cyano complex nanoparticle thin film according to Preparation Example 1-D is formed. In the ECD4, the potential was defined with the working electrode on the tungsten oxide thin film side.

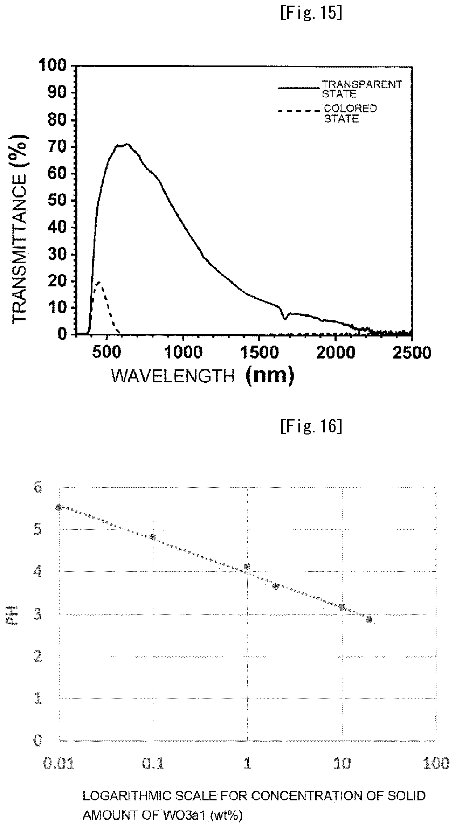

Fig. 15 shows the result of acquiring the total light transmission spectrum of the ECD4. This measurement was performed with a battery of plus or minus 1.5 V. As shown in Fig. 15, the ECD4 can switch the transmittance not only in the visible light region but also in a wide wavelength region up to the near infrared region. From the obtained measurement data, the visible light transmittance and the solar transmittance were calculated with JIS R 3106:1998 (ISO 9050:2003). The visible light transmittance was 67.90% in the transparent state and 4.47% in the colored state. The solar transmittance was 47.81% in the transparent state and 3.19% in the colored state.

From the above results, it is found to exhibit an effective performance as a light control film.

In the following description, an experiment was performed on the relationship between the pH of the coating material according to the present invention and the physical properties of the coating material.

### <Example 7>

The tungsten oxide nanoparticles 1 (powder sample) were suspended in water such that the amount added was 0.10% by mass with respect to the total coating material, then PVA was added as a binder so as to be 0.01% by mass in order to lower the surface tension, and stirring was performed to provide a coating material. Similarly, a coating material was obtained such that the amount of the tungsten oxide nanoparticles 1 added was 1% by mass and the amount of PVA added was 0.1% by mass with respect to the total coating material. Similarly, a coating material was obtained such that the amount of the tungsten oxide nanoparticles 1 added was 10% by mass and the amount of PVA added was 1% by mass with respect to the total coating material. Similarly, a coating material was obtained such that the amount of the tungsten oxide nanoparticles 1 added was 20% by mass and the amount of PVA added was 2% by mass with respect to the total coating material. Herein, the case where the amount of the tungsten oxide nanoparticles 1 added is 0% by mass refers to pure water produced by Milli-Q (registered trademark).

Fig. 16 is a graph showing the relationship between the amount (% by mass) of the tungsten oxide nanoparticles 1 added and the pH of the coating material for Example 7. As shown in Fig. 16, the pH of the coating material relatively attenuates in accordance with the amount of the tungsten oxide nanoparticles 1 added. Specifically, the pH is 4.83 in the case of 0.10% by mass, the pH is 4.11 in the case of 1% by mass, the pH is 3.15 in the case of 10% by mass, and the pH is 2.87 in the case of 20% by mass.

### <Example 8>

A coating material having a pH of 2 to 7 was obtained by adjusting, with HCl or NaOH, the pH of 20 mL of the coating material in which the solid amount of the tungsten oxide nanoparticles 1 was prepared to 0.1% by mass with respect to the total coating material and PVA was adjusted to have 0.01% by mass as a binder.

Table 1 shows the types and amounts added of the pH adjusting agents used in Example 8 and the pH after adjustment.

**[Table 1]**

| Target pH | pH adjusting agent | Amount added µl | Measured value of pH |
|---|---|---|---|
| 2 | 1M HCL | 130 | 2.00 |
| 3 | 1M HCL | 13 | 3.00 |
| 4 | 0.1M HCL | 120 | 4.00 |
| 5 | 0.001M NaOH | 400 | 5.08 |
| 6 | 0.01M NaOH | 300 | 6.06 |
| 7 | 0.1M NaOH | 300 | 7.18 |

As described above in Example 7, the pH relatively attenuates in accordance with the amount of the tungsten oxide nanoparticles added. Specifically, in a case where the amount of the tungsten oxide nanoparticles added was 0.1% by mass, the pH was about 4.83. As understood from Table 1, it is possible to adjust the pH of the coating material with a pH adjusting agent. Specifically, it was possible to adjust the pH of the coating material as desired by adding an acidic solvent (HCL) or a basic solvent (NaOH) to the coating material.

### <Example 9>

A coating material according to Example 9 was prepared by adjusted, with 0.1M NaOH, the pH of 20 mL of the coating material in which the solid amount of the tungsten oxide nanoparticles 1 was prepared to 7.9% by mass or 20% by mass with respect to the total coating material, and 0.79% by mass and 2% by mass of PVA were added respectively as a binder.

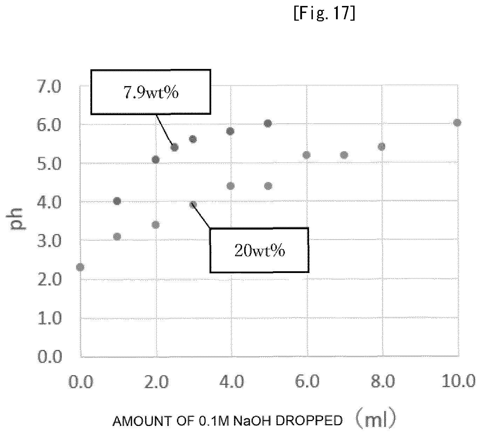

Fig. 17 is a graph showing the relationship between the amount of 0.1M NaOH added and the pH of the coating material for the coating material of Example 9. As in the case of Fig. 16, the pH was on an acidic side as the concentration of the tungsten oxide nanoparticles increased. Then, it was possible to adjust the pH by adjusting the amount of NaOH added for each concentration of tungsten oxide nanoparticles.

### <Example 10>

A tungsten oxide thin film was prepared with a coating material, the pH of which was adjusted by adding 0.1M NaOH to 20 mL of a coating material in which the solid amount of the tungsten oxide nanoparticles 1 was prepared to 20% by mass with respect to the total coating material, and PVA was added as a binder so as to be 2% by mass. A plurality of tungsten oxide thin films were prepared with different amounts (that is, pH) of 0.1M NaOH added. 400 *µ*l of the coating material was weighed with a micropipette, dropped onto a 50 mm square ITO-coated glass substrate placed in a spin coater, rotation was performed at 500 rpm for 10 seconds, and then at 1000 rpm for 10 seconds to form a thin film. The prepared thin film was naturally dried to provide a tungsten oxide thin film according to Example 10. The film thickness of the tungsten oxide thin film according to Example 10 can be confirmed to be affected by the pH of the coating material. Specifically, about 0.57 nm in a case where the pH was 3 (the amount of 0.1M NaOH added was 1 ml with respect to 20 mL of the coating material), about 0.43 nm in a case where the pH was 4 (the amount of 0.1M NaOH added was 3 ml with respect to 20 mL of the coating material), about 0.34 nm in a case where the pH was 5 (the amount of 0.1M NaOH added was 6 ml with respect to 20 mL of the coating material), and about 0.33 nm in a case where the pH was 6 (the amount of 0.1M NaOH added was 10 ml with respect to 20 mL of the coating material).

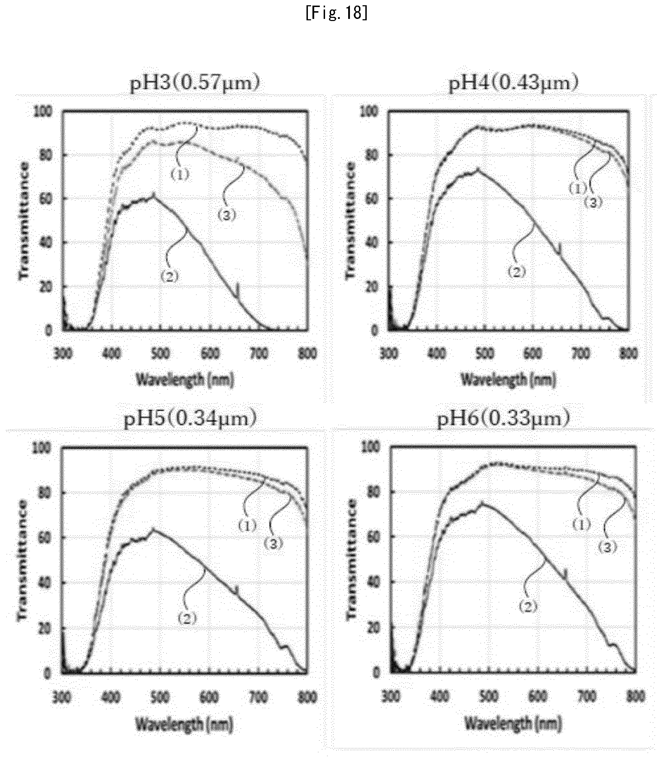

Fig. 18 shows a visible light transmission spectrum change of a tungsten oxide thin film according to Example 10. In Fig. 18, the broken line indicated by (1) is the visible light transmission spectrum change in the initial state, the solid line indicated by (2) is the visible light transmission spectrum change when the initial state is changed to the colored state, and the broken line indicated by (3) is the visible light transmission spectrum change when the colored state is returned to the transparent state.

As shown in Fig. 18, none of the tungsten oxide thin films was negatively affected by the pH adjusting agent, and oxidation-reduction reactions were exhibited. Over 60 seconds, a dark colored state was exhibited when a voltage of 1.0 V was applied, and the state was displaced to a transparent state when a voltage of -1.2 V was applied. On the other hand, at pH of 3, the state did not completely return to the original colorless and transparent state in 60 seconds, and the pH of about 5 suggested excellent contrast between the colored state and the transparent state.

Based on the same procedure as in ECD1, an ECD including a tungsten oxide thin film made of a pH-adjusted coating material was prepared. Soda glass and a PET film were used as base materials, and ITO, FTO (fluorine-doped tin), and high durability TCO (transparent conductive oxide) were used as transparent electrode materials, and the base materials were also compared.

### <ECD5>

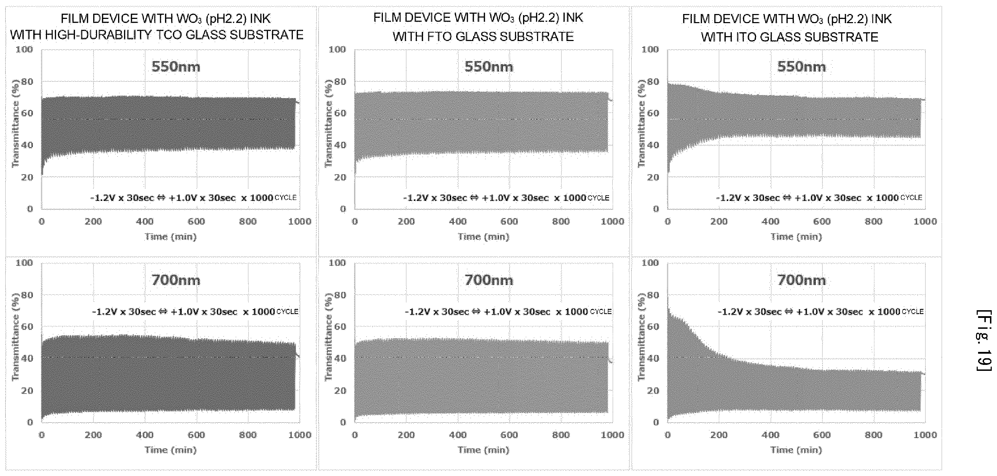

An ECD5 is an electrochromic device (using a glass substrate) including a tungsten oxide thin film prepared from a coating material having a pH of 2.2 (coating material prepared such that the solid amount of the tungsten oxide nanoparticles 1 is 13.9% by mass and the amount of PVA added is 0.7% by mass with respect to the total coating material). The ECD5 was subjected to a cycle test under the measurement conditions in Table 2 to investigate changes in transmittance at light of 550 nm and 700 nm. As shown in Table 2, a cycle of alternately applying a voltage of -1.2 V (30 seconds) and a voltage of +1.0 V (30 seconds) was repeated 1000 times continuously (continuous measurement: about 16.6 hours). The results of the cycle test are shown in Fig. 19.

**[Table 2]**

| <MPS cycle durability measurement condition> | | | |
|---|---|---|---|
| Measurement condition | | Unit | Value |
| Initial Potential | | V | 1.0 |
| Number of cycles | | | 1,000 |
| Sampling Interval | | s | 0.02 |
| Quiet Time | | s | 30 |
| Sensitivity | | A/V | 0.01 |
| Step 1 | 1st Step Potential | V | -1.2 |
| | 1st Step Time | s | 30 |
| Step 2 | 2st Step Potential | V | 1.0 |
| | 2st Step Time | s | 30 |

As shown in Fig. 19, stable cycle resistance was observed for high durability TCO and FTO, but rapid degradation was observed for ITO. This suggests that the ITO was corroded by the attack of the acidic tungsten oxide thin film on the ITO. The high-durability TCO and FTO, which are transparent electrode materials, are excellent in chemical resistance and corrosion resistance and have high stability as compared with ITO, and thus have favorable durability.

### <ECD6>

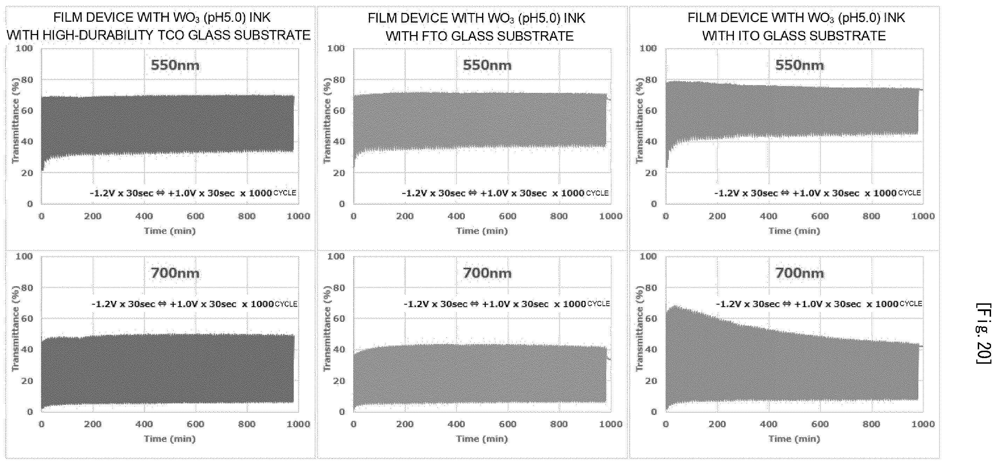

An ECD6 is an electrochromic device (using a glass substrate) including a tungsten oxide thin film prepared from a coating material having a pH of 5.0 (coating material in which 5 ml of an amount of 0.1M NaOH added has been added to 20 mL of a coating material prepared such that the solid amount of the tungsten oxide nanoparticles 1 with respect to the total coating material is 14.0% by mass and the amount of PVA added is 0.7% by mass). The ECD6 was also subjected to a cycle test under the measurement conditions in Table 2 to investigate changes in transmittance at light of 550 nm and 700 nm. The results of the cycle test are shown in Fig. 20. As shown in Fig. 20, high-durability TCO and FTO show stable cycle resistance, and ITO shows slow degradation behavior. However, for ITO, it is found that the ECD6 has higher durability than the ECD5. As understood from the above description, it is possible to improve the durability by adjusting the pH of the coating material.

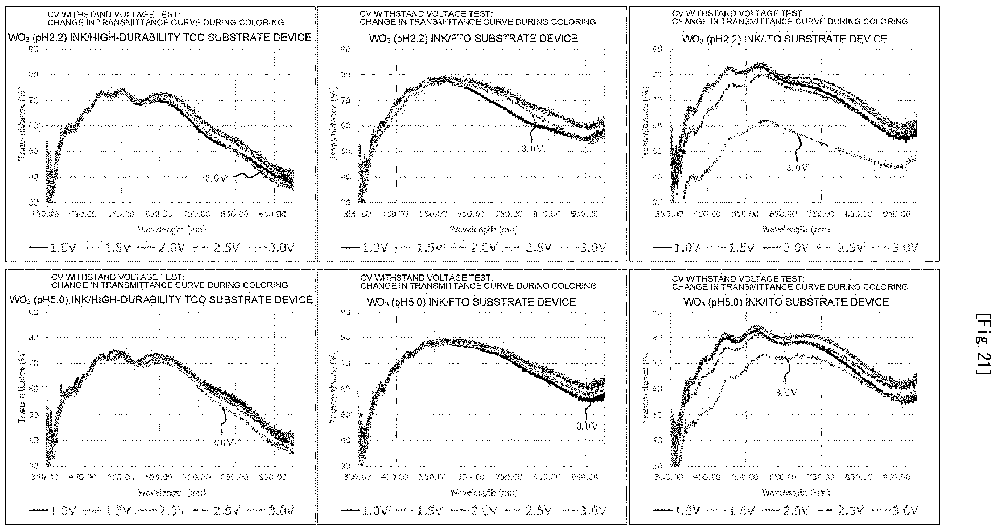

Fig. 21 shows visible light transmission spectrum changes when the withstand voltage characteristics of the ECD5 and ECD6 were measured under the conditions of Table 3. Herein, after CV measurement (high potential, low potential, and then final potential) was completed at each applied voltage, a device color (discoloration of the transparent conductive film or a color change state of the light control film) was monitored when a coloring reaction was caused by applying a negative potential and then a decoloring reaction was caused by applying a positive potential while the voltage was raised and lowered at a pitch of 0.5 V by a multipotential step (MPS) method.

**[Table 3]**

| Test condition | | Test① (± 1. 5V) | | | Test② (±2. 0V) | | | Test③ (±2. 5V) | | | Test④ (±3. 0V) | | |
|---|---|---|---|---|---|---|---|---|---|---|---|---|---|
| | | CV | MPS 1 | MPS 2 | CV | MPS 1 | MPS 2 | CV | MPS 1 | MPS 2 | CV | MPS 1 | MPS 2 |
| Initial potential | V | +1.5 | +1.5 | -1.5 | +2.0 | +2.0 | -2.0 | +2. 5 | +2. 5 | -2.5 | +3.0 | +3.0 | -3.0 |
| Number of cycles | Times | 1 | 1 | 1 | 1 | 1 | 1 | 1 | 1 | 1 | 1 | 1 | 1 |
| Quiet time | sec | 30 | 10 | 10 | 30 | 10 | 10 | 30 | 10 | 10 | 30 | 10 | 10 |
| Sensitivity | A/V | 0. 001 | 0.01 | 0.01 | 0. 001 | 0.01 | 0.01 | 0. 001 | 0.01 | 0.01 | 0. 001 | 0.01 | 0.01 |
| High potential | V | +1.5 | | | +2.0 | | | +2. 5 | | | +3.0 | | |
| Low potential | V | -1.5 | | | -2.0 | | | -2.5 | | | -3.0 | | |
| Final potential | V | +1.5 | | | +2.0 | | | +2. 5 | | | +3.0 | | |
| Scan speed | V/sec | 0.01 | | | 0.01 | | | 0.01 | | | 0.01 | | |
| | V | | -1.5 | +1.5 | | -2.0 | +2.0 | | -2.5 | +2. 5 | | -3.0 | +3.0 |
| Withstand voltage application | sec | | 60 | 60 | | 60 | 60 | | 60 | 60 | | 60 | 60 |

As shown in Fig. 21, in the use of ITO, rapid deterioration is observed particularly by application of a high voltage in the ECD5 (pH of 2.2), and deterioration is also observed in the ECD6 (pH of 5.0), but it is found that the deterioration is suppressed to some extent. Adjusting the pH of the coating material in this manner can also improve the withstand voltage characteristics. In addition, in the comparison of transparent electrode materials, in the case of high-durability TCO and FTO, deterioration was not observed so much even at a high voltage, and superiority over ITO was also suggested.

### <ECD7>

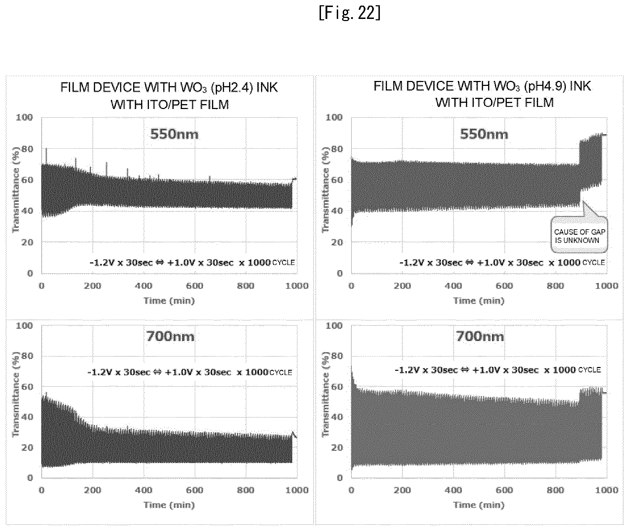

For an electrochromic device (using a PET substrate) including a tungsten oxide thin film prepared from a coating material with the pH adjusted, a cycle test was performed under the conditions of Table 2 to investigate a change in transmittance in light of 550 nm and 700 nm. A tungsten oxide thin film was prepared with the coating material each adjusted to a pH of 2.4 and a pH of 4.9 by adding 0.1M NaOH to the coating material prepared such that the solid amount of the tungsten oxide nanoparticles 1 with respect to the total coating material was 15% by mass and the amount of PVA added was 0.7% by weight. The results of the cycle test are shown in Fig. 22. As shown in Fig. 22, it is found that even in a case where the substrate is changed from a glass base material to a PET substrate, the electrochromic device with the tungsten oxide thin film made of a coating material having a pH of 2.4 deteriorates quickly, whereas the electrochromic device with the tungsten oxide thin film made of a coating material adjusted to a pH of 4.9 exhibits high durability. As understood from the above description, it is an effective method to adjust the pH of the coating material as a method for improving durability.

As understood from the above description, it is understood that a change width of the transmittance is large in the ECD according to the present invention. The contrast is higher as the change range of the transmittance is wider, and thus according to the ECD according to the present invention, it is possible to achieve an electrochromic device that performs coloring and decoloring with high contrast without using an organic electrochromic material. This device is assumed to be used for a light control glass film, a display, an indicator, and the like, and particularly has the ability to control a long-wavelength component, and thus is also expected to be used as an energy saving light control member capable of optimizing an inflow amount of infrared rays or the like which is a heat component of solar energy, such as an automobile window glass and a building material window glass.

The embodiments according to the present invention have been described above, and the present invention is not necessarily limited thereto, and those skilled in the art will be able to find various alternative embodiments without departing from the gist of the present invention or the appended claims.

### Reference Signs List

- 100: : ECD
- 10: : First electrochromic layer
- 20: : Second electrochromic layer
- 30: : Electrolyte layer
- 40: : First transparent electrode layer
- 50: : Second transparent electrode layer
- 60: : First insulating layer
- 70: : Second insulating layer

## Claims

1. A tungsten oxide coating material for an electrochromic device that is a coating material for forming a tungsten oxide thin film having electrochromic characteristics, the coating material comprising:
a solvent;
tungsten oxide nanoparticles dispersed in the solvent; and
a binder, wherein
in the tungsten oxide nanoparticles, a half-value width of a peak detected at 29° ±1° in X-ray diffraction analysis (2*θ*) is 2° or less, and a primary particle size is 5 to 25 nm.

2. The tungsten oxide coating material for an electrochromic device according to claim 1, wherein a content of the tungsten oxide nanoparticles is 5% by mass or more and 30% by mass or less with respect to a mass of the coating material.

3. The tungsten oxide coating material for an electrochromic device according to claim 1, wherein
the binder is one or more types selected from polyvinyl alcohol (PVA), sodium carboxymethylcellulose (CMC), hydroxypropyl cellulose (HPC), and hydroxyethyl cellulose (HEC), and
a content of the binder is 0.1% by mass or more and 10% by mass or less with respect to a mass of the coating material.

4. The tungsten oxide coating material for an electrochromic device according to claim 1, comprising a pH adjusting agent.

5. The tungsten oxide coating material for an electrochromic device according to claim 4, wherein the pH adjusting agent is one or more types selected from potassium chloride (KCl), sodium chloride (NaCl), lithium chloride (LiCI), potassium hydroxide (KOH), sodium hydroxide (NaOH), and lithium hydroxide (LiOH).

6. The tungsten oxide coating material for an electrochromic device according to claim 4, wherein pH is 5 to 7.

7. The tungsten oxide coating material for an electrochromic device according to claim 1, wherein a tungsten oxide thin film is capable of being formed by a coating method.

8. A tungsten oxide thin film that is a thin film having electrochromic characteristics, the tungsten oxide thin film comprising:
tungsten oxide nanoparticles; and
a binder, wherein
in the tungsten oxide nanoparticles,
a half-value width of a peak detected at 29° ±1° in X-ray diffraction analysis (2*θ*) is 2° or less, and
a primary particle size is 5 to 25 nm.

9. The tungsten oxide thin film according to claim 8, comprising
a pH adjusting agent.

10. The tungsten oxide thin film according to claim 8, wherein an electrochromic reaction occurs in an electrolyte including any one or more types of (trifluoromethanesulfonyl)imide salts of bis(trifluoromethanesulfonyl) imide, lithium bis(trifluoromethanesulfonyl)imide, potassium bis(trifluoromethanesulfonyl) imide, and sodium bis(trifluoromethanesulfonyl) imide.

11. A light control member, comprising:
the tungsten oxide thin film according to claim 8;
a metal cyano complex thin film including metal cyano complex nanoparticles or an oxide thin film including oxide nanoparticles in which a change in coloring and
decoloring due to an oxidation-reduction reaction is opposite to that of tungsten oxide; and
an electrolyte layer located between the tungsten oxide thin film and the metal cyano complex thin film or the oxide thin film.
